Europäisches Patentamt

European Patent Office

Office européen des brevets

(19)

(11) **EP 1 120 932 A1**

(12) **EUROPÄISCHE PATENTANMELDUNG**

(43) Veröffentlichungstag:
01.08.2001 Patentblatt 2001/31

(51) Int Cl.[7]: **H04L 1/00**, H04L 1/20

(21) Anmeldenummer: 00810080.2

(22) Anmeldetag: 28.01.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder: **Dzung, Dacfey, Dr.**
**5430 Wettingen (CH)**

(74) Vertreter: **ABB Patent Attorneys**
**c/o ABB Business Services Ltd,**
**Intellectual Property (SLE-I),**
**Haselstrasse 16/699**
**5401 Baden (CH)**

(54) **Datenübertragung mit variabler Paketlänge**

(57)     In einem Verfahren zur Datenübertragung mit variabler Paketlänge wird während der Datenübertragung mittels eines Automatic Repeat Request (ARQ) Protokolls eine gemessene Paketfehlerrate ermittelt. Anhand dieser gemessenen Paketfehlerrate wird eine geschätzte Bitfehlerrate ermittelt. Anhand dieser geschätzte Bitfehlerrate eine optimale Nutzdatenlänge, welche einen relativen Datendurchsatz maximiert, ermittelt. Diese optimale Nutzdatenlänge wird zur Datenübertragung verwendet.

Die Erfindung hat den Vorteil, dass die optimale Nutzdatenlänge ändernden Bitfehlerraten nachgeführt wird, so dass dauernd ein maximaler Datendurchsatz erreicht wird. Dies ist insbesonder bei Datenübertragungsstrecken mit relativ hohen Bitfehlerraten, das heisst Bitfehlerraten grösser als 0.001 oder 0.01, von Vorteil.

Fig. 1

EP 1 120 932 A1

## Beschreibung

### Technisches Gebiet

Die Erfindung bezieht sich auf das Gebiet der Kommunikationstechnik. Sie bezieht sich auf ein Verfahren und eine Vorrichtung zur Datenübertragung mit variabler Paketlänge gemäss dem Oberbegriff der Patentansprüche 1 und 8.

### Stand der Technik

Ein allgemein bekanntes Verfahren zur Datenübertragung mittels eines Automatic Repeat Request (ARQ) Protokolls ist in "Telecommunication Networks: Protocols, Modeling and Analysis", Mischa Schwartz, Addison-Wesley, 1988, Seiten 119-134, beschrieben. Beim ARQ-Protokoll wird, nach einer Detektion eines Fehlers in einem empfangenen Datenpaket das Datenpaket wiederholt gesendet. Bei gleicher Wahrscheinlichkeit eines Bitfehlers in einem Datenpaket können in störungsärmeren Übertragungskanälen längere Datenpakete verwendet werden. Dies ist von Vorteil, da ein längeres Datenpaket mehr Nutzdaten im Verhältnis zu Steuerdaten oder Kopfdaten aufweist. Werden die Datenpakete jedoch länger, steigt die Wahrscheinlichkeit, dass ein Paketfehler auftritt und ein Paket wiederholt werden muss. Dadurch verringert sich eine durchschnittliche Übertragungsrate der Nutzdaten. Deshalb wird die Länge von Datenpaketen beim Entwurf eines Datenübertragungssystems entsprechend dem Übertragungskanal optimiert und fest eingestellt.

Bei einer Änderung von Kanaleigenschaften ist eine Übertragung mit einer fest eingestellten Länge von Datenpaketen jedoch nicht mehr optimal. Deshalb existieren Verfahren zur Datenübertragung mit variabler Paketlänge. Ein solches ist beispielsweise aus der US 5,490,168 bekannt. Darin ist offenbart, wie in einem Verfahren zur Datenübertragung mittels des Automatic Repeat Request (ARQ) Protokolls eine Länge von Datenpaketen angepasst wird, indem zwischen zwei vorgegebenen Längen umgeschaltet wird, je nach dem, ob eine Anzahl Wiederholungen von Datenpaketen vorgegebene Schwellwerte über- oder unterschreitet. Dadurch wird jedoch keine optimale Anpassung der Paketlänge an die Kanaleigenschaften erreicht. Im Artikel "Throughput Performance of SAW-ARQ Protocol with Adaptive Packet Length in Mobile Packet Data Transmission ", S. Hara et al., IEEE Transactions on Vehicular Technology, Vol. 45, No. 3, Aug. 1996 wird ebenfalls ein ARQ-Verfahren mit variabler Paketlänge beschrieben. Darin sind Paketlängen von 128, 256, 512, 1024 und 2048 bits vorgegeben. Wenn eine Paketfehlerrate einen Schwellwert unterschreitet respektive überschreitet, wird jeweils auf eine höhere respektive niedrigere Paketlänge umgeschaltet. Auch dadurch wird keine optimale Anpassung der Paketlänge an die Kanaleigenschaften erreicht.

### Darstellung der Erfindung

Es ist deshalb Aufgabe der Erfindung, ein Verfahren und eine Vorrichtung zur Datenübertragung mit variabler Paketlänge eingangs genannten Art zu schaffen, welche die oben genannten Nachteile behebt.

Diese Aufgabe lösen ein Verfahren und eine Vorrichtung zur Datenübertragung mit variabler Paketlänge mit den Merkmalen der Patentansprüche 1 und 8.

Im erfindungsgemässen Verfahren zur Datenübertragung mit variabler Paketlänge wird während der Datenübertragung mittels eines Automatic Repeat Request (ARQ) Protokolls eine Paketfehlerrate gemessen, anhand dieser gemessenen Paketfehlerrate eine geschätzte Bitfehlerrate ermittelt, und anhand dieser geschätzten Bitfehlerrate eine optimale Nutzdatenlänge, welche einen relativen Durchsatz der Daten maximiert, ermittelt und diese optimale Nutzdatenlänge zur Datenübertragung verwendet.

Die Erfindung hat den Vorteil, dass bei ändernden Bitfehlerraten stets die optimale Nutzdatenlänge verwendet wird, so dass dauernd ein maximaler Datendurchsatz erreicht wird. Dies ist insbesondere bei Datenübertragungsstrecken mit relativ hohen Bitfehlerraten von Vorteil.

Ein weiterer Vorteil der Erfindung ist, dass die Anpassung an die Bitfehlerrate keine Änderung in einer physikalischen Kommunikationsschicht der Datenübertragung benötigt, sondern nur in logischen, softwaregesteuerten Kommunikationssschichten.

Weitere bevorzugte Ausführungsformen gehen aus den abhängigen Patentansprüchen hervor.

### Kurze Beschreibung der Zeichnungen

Im folgenden wird die Erfindung anhand bevorzugter Ausführungsbeispiele, welche anhand der beiliegenden Zeichnungen erklärt sind, näher erläutert. Es zeigen:

Figur 1    schematisch eine Struktur einer erfindungsgemässe Vorrichtung;

Figur 2    Abhängigkeiten eines relativen Durchsatzes $\eta$ von einer Paketfehlerrate $p(d)$ und von einer Bitfehlerrate $p_b$;

Figur 3    eine Abhängigkeit einer optimalen Nutzdatenlänge $d_{opt}$ von einer Bitfehlerrate Bitfehlerrate $p_b$; und

Figur 4    eine Abhängigkeit des relativen Durchsatzes $\eta$ bei optimaler Nutzdatenlänge $d_{opt}$ von einer Bitfehlerrate $p_b$.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## Wege zur Ausführung der Erfindung

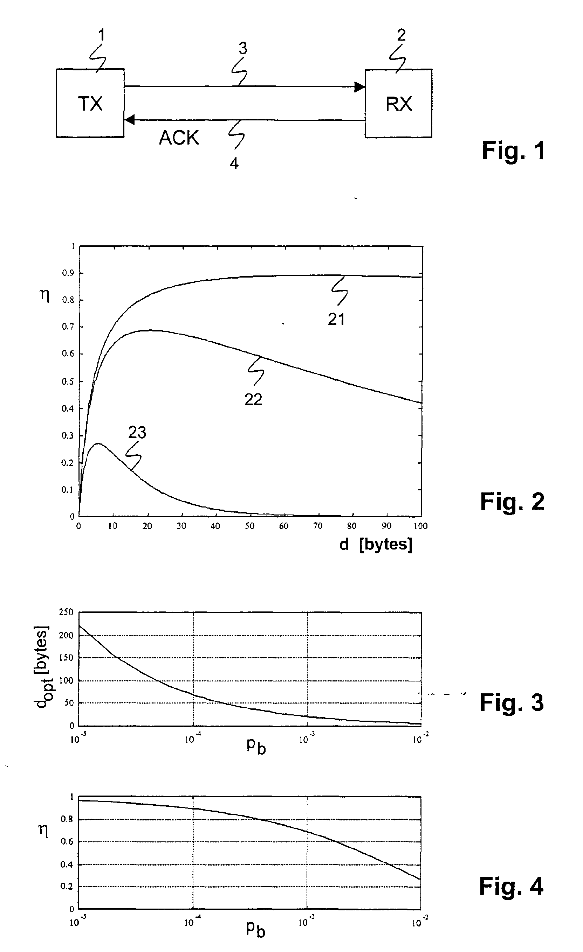

Figur 1 zeigt schematisch eine Struktur einer Vorrichtung zur Datenübertragung respektive ein Datenübertragungssystem gemäss der Erfindung. Das Datenübertragungssystem weist einen Sender 1 und einen Empfänger 2 auf. Der Sender 1 weist Mittel zum Senden von Daten 3 über einen Datenübertragungskanal an den Empfänger 2 sowie Mittel zum Empfangen von Bestätigungssignalen 4 auf. Der Empfänger.2 weist Mittel zum Empfangen von Daten 3 sowie Mittel zum Senden von Bestätigungssignalen 4 auf.

Das Verfahren zur Datenübertragung funktioniert in bekannter Weise mittels eines Automatic Repeat Request (ARQ) Protokolls, wie es in "Telecommunication Networks: Protocols, Modeling and Analysis", Mischa Schwartz, Addison-Wesley, 1988, Seiten 119-134, beschrieben ist: Zu übertragende Nutzdaten werden in Nutzdatenpakete mit einer Nutzdatenlänge von d bits aufgetrennt. Einem Nutzdatenpaket werden Kopfdaten mit einer Länge von h bits zugeordnet. Kopfdaten umfassen beispielsweise Synchronisations-, Adressierungs- und Steuerinformationen, sowie eine Prüfsumme oder andere Informationen zur Fehlererkennung. Nutzdatenpaket und Kopfdaten bilden zusammen ein Datenpaket oder einen Datenrahmen mit einer Länge von h+d bits. Der Sender 1 sendet resp. überträgt ein Datenpaket als Daten 3 an den Empfänger 2. Der Empfänger 2 empfängt und prüft die Daten 3 in bekannter Weise, beispielsweise anhand der Prüfsumme. Detektiert der Empfänger 3 einen Fehler in einem Datenrahmen, so übermittelt der Empfänger 3 dem Sender 1 ein negatives oder kein Bestätigungssignal 4, worauf der Sender 1 den Datenrahmen erneut sendet.

Das erneute Senden des Datenrahmens geschieht in bekannter Weise, indem der Sender auf das Bestätigungssignal wartet, bevor er einen weiteren oder einen wiederholten Datenrahmen sendet ("Stop-and-wait protocol"), oder indem der Sender den fehlerhaften und alle darauffolgenden Datenrahmen erneut sendet ("Go-back-N protocol"), oder indem der Sender nur den fehlerhaften Datenrahmen wiederholt ("Selective-repeat protocol"). Detektiert der Empfänger 3 keinen Fehler in einem Datenrahmen, so übermittelt der Empfänger 3 dem Sender 1 ein positives Bestätigungssignal.

Die Wahrscheinlichkeit, dass bei der Übertragung ein Fehler in einem Datenpaket aufftritt, wird Paketfehlerrate p(d) des Datenübertragungssystems genannt. Bei unabhängigen Bitfehlern und bei einer Bitfehlerwahrscheinlichkeit oder Bitfehlerrate $p_b$ beträgt die Paketfehlerrate p(d)

$$p(d) = 1 - (1 - p_b)^{h+d} \qquad (1)$$

Im Durchschnitt muss ein Datenrahmen eine durchschnittliche Anzahl von Wiederholungen $n_{rep}$ mal gesendet werden, wobei $n_{rep} = 1/(1-p(d))$ beträgt. Dabei wird angenommen, dass die kurzen Bestätigungssignale fehlerfrei übertragen werden. Um somit d Nutzdatenbits zu übertragen, werden $n_{rep}^{*}(h+d)$ Bits übertragen. Das Verhältnis zwischen diesen beiden Zahlen wird als relativer Durchsatz η bezeichnet und beträgt somit beim "Stop-and-wait protocol"

$$\eta(d) \triangleq \frac{d}{n_{rep} \cdot (h+d)} = \frac{d}{h+d} \cdot (1 - p(d)) \qquad (2)$$

Figur 2 zeigt verschiedene Verläufe des relativen Durchsatzes η in Abhängigkeit der Paketfehlerrate p(d) und für verschiedene Bitfehlerraten $p_b$.

Ein erster Verlauf 21 entspricht einer Bitfehlerrate $p_b$=0.0001, ein zweiter Verlauf 22 entspricht einer Bitfehlerrate $p_b$=0.001, ein dritter Verlauf 23 entspricht einer Bitfehlerrate $p_b$=0.01. Die Kopflänge h beträgt jeweils 32 Bits.

Die Kopflänge h ist durch ein Übertragungsprotokoll gegeben und ist konstant. Die Nutzdatenlänge d beeinflusst den relativen Durchsatz η über zwei einander entgegenwirkende Effekte: Eine Erhöhung der Nutzdatenlänge d verringert den relativen Anteil der Kopflänge h an den übertragenen Daten. Alleine betrachtet würde dies eine Erhöhung des relativen Durchsatzes η bewirken. Die Erhöhung der Nutzdatenlänge d erhöht aber die Wahrscheinlichket eines Paketfehlers und damit auch die durchschnittliche Anzahl von Wiederholungen $n_{rep}$. Diese wirkt in Richtung einer Verringerung des relativen Durchsatzes η. Eine optimale Wahl $d_{opt}$ der Nutzdatenlänge d in Abhängigkeit von einer gegebenen Bitfehlerrate $p_b$ lässt sich für einen relativen Durchsatz η gemäss Gleichung (2) analytisch bestimmen, wie im oben erwähnten Buch von M. Schwartz angegeben.

Figur 3 zeigt einen Verlauf der optimalen Nutzdatenlänge $d_{opt}$ in Anhängigkeit der Bitfehlerrate $p_b$ für eine gegebene Kopflänge h=32bits.

Figur 4 zeigt einen Verlauf des relativen Durchsatzes η in Anhängigkeit der Bitfehlerrate $p_b$, wenn bei jeder Bitfehlerrate $p_b$ eine dieser Bitfehlerrate $p_b$ entsprechende optimale Nutzdatenlänge $d_{opt}$ verwendet wird.

Erfindungsgemäss wird die Nutzdatenlänge d laufend und dynamisch den Kanaleigenschaften angepasst, so dass der relative Durchsatz η maximal wird. Dazu weist das erfindungsgemässe Verfahren die folgenden Schritte auf:

1. Wahl eines Initialwertes für die Nutzdatenlänge d und somit einer Länge der Datenrahmen von d+h.
2. Verwendung des ARQ-Protokolls. Für ein Zeitintervall, beginnend bei einem Anfangszeitpunkt T1 bis zu einem Zeitpunkt T2 wird eine gesamte Anzahl k1 von übertragenen (fehlerhaften oder korrekten) Datenrahmen und eine Anzahl k2 von fehlerhaft übertragenen Datenrahmen gemessen. Nachdem beispielsweise eine vorbestimmte Anzahl von fehlerhaft übertragenen Datenrahmen erreicht ist, wird eine gemessene Paketfehlerrate p̂(d) als

$$\hat{p}(d) = \frac{k2}{k1} \qquad (3)$$

bestimmt.

3. Aus der gemessenen Paketfehlerrate $\hat{p}(d)$ wird aus der Umkehrung von Gleichung (1), also aus

$$\hat{p}_b = 1 - (1 - \hat{p}(d))^{1/(h+d)} \qquad (4)$$

eine geschätzte Bitfehlerrate $\hat{p}_b$ bestimmt.

4. Aus der geschätzten Bitfehlerrate $p_b$ wird eine optimale Nutzdatenlänge $d_{opt}$ bestimmt, welche den relativen Durchsatz η maximiert. Für einen relativen Durchsatz η gemäss Gleichung (2) beträgt die optimale Nutzdatenlänge $d_{opt}$

$$d_{opt} = -\frac{h}{2} + \sqrt{\frac{h^2}{4} - \frac{h}{\log(1 - \hat{p}_b)}} \qquad (5)$$

respektive ein nächstliegender ganzzahliger Wert.

5. Die optimale Nutzdatenlänge $d_{opt}$ wird zur Datenübertragung verwendet.

6. Fortsetzung des Verfahrens bei Schritt 2.

Die Nutzdatenlänge ist somit nicht an vorgegebene Werte gebunden sondern nimmt beliebige ganzzahlige positive Werte an.

Die Berechnungen des oben beschriebenen erfindungsgemässen Verfahrens werden beispielsweise im Sender oder im Empfänger durchgeführt und Resultate und Umschaltzeitpunkte auf eine veränderte optimale Nutzdatenlänge dopt der jeweiligen Gegenstation übermittelt. In einer anderen Variante werden die Berechnungen sowohl im Sender als auch im Empfänger parallel durchgeführt, da beide über die gleichen Ausgangsinformationen, das heisst Werte von k1 und k2, verfügen.

In einer bevorzugten Variante der Erfindung berücksichtigt die Optimierung der Nutzdatenlänge nicht nur, wie in Gleichung (2), die gemessene Paketfehlerrate p̂(d), sondern auch eine Verzögerungszeit $t_d$, welche beispielsweise durch eine Übertragungsverzögerung hervorgerufen wird. Die Verzögerungszeit $t_d$ ist konstant oder variabel, jedoch messbar. Der relative Durchsatz η beträgt in dieser Variante, mit Verwendung des "go-back-N protocols"

$$\eta(d) = \frac{d}{d + h} \cdot \frac{1 - p(d)}{1 - \hat{p}(d) + a \cdot \hat{p}(d)} , \qquad (6)$$

wobei

$$a = \frac{(h + d)T_b + 2t_d}{(h + d)T_b}$$

die relative Verzögerung bezeichnet. Dabei ist a ≥ 1 und ist $T_b$ gleich einer Bitdauer, das heisst der zeitlichen Länge eines Bits.

Anstelle der Schritte 3 und 4 des oben beschriebenen erfindungsgemässen Verfahrens wird somit in dieser Variante anhand der gemessenen Paketfehlerrate p̂(d) und der Verzögerungszeit $t_d$ die Nutzdatenlänge d so gewählt, dass der relative Durchsatz η gemäss Gleichung (6) maximal ist. Da keine geschlossene Lösung existiert, geschieht dies vorzugsweise durch ein numerisches Optimierungsverfahren.

In einer weiteren bevorzugten Variante der Erfindung werden andere allgemein bekannte Varianten des ARQ-Protokolls verwendet. Beispielsweise werden Datenrahmen numeriert und Bestätigungen dieser Datenrahmen ebenfalls numeriert. Dadurch verringert sich bei langen Übertragungsstrecken eine durchschnittliche Verzögerung bis zur Wiederholung eines fehlerhaft empfangenen Datenrahmens und es verbessert sich eine Kanalausnutzung. In dieser Variante werden eine entsprechend angepasste Gleichung für den relativen Durchsatz η und eine entsprechende Optimierung im Schritt 3 des oben beschriebenen erfindungsgemässen Verfahrens verwendet.

In einer bevorzugten Variante der Erfindung wird die Optimierung entsprechend der gültigen Gleichung für den relativen Durchsatz η bei bekannter Kopflänge h bereits beim Entwurf des Datenübertragungssystems durchgeführt und die Abhängigkeit der optimalen Nutzdatenlänge $d_{opt}$ von der Paketfehlerrate p(d) oder der Bitfehlerrate $p_b$ in einer Funktionstabelle oder mittels einer Annäherung durch ein Polynom gespeichert. Falls der relative Durchsatz η von mehr als einem variablen Parameter abhängt, beispielsweise auch von der Verzögerungszeit td, wird vorzugsweise eine Kombination einer Tabelle mit einer polynomialen Darstellung, oder ein zweidimensionales Polynom verwendet. Beim Betrieb des erfindungsgemässen Verfahrens wird die optimale Nutzdatenlänge $d_{opt}$ anhand der im voraus berechneten Tabelle und/oder polynomialen Darstellung direkt aus der geschätzten Bitfehlerrate $\hat{p}_b$ oder aus der gemessenen Paketfehlerrate p̂(d) und allfälligen weiteren Parametern ermittelt. Diese Variante hat den Vorteil, dass keine online-Optimierung stattfinden muss. Beispielsweise wird der sich aus der Kombination von (4) und (5) ergebende Zusammenhang

$$d_{opt} = -\frac{h}{2} + \sqrt{\frac{h^2}{4} - \frac{h(h + d)}{\log(1 - \hat{p}(d))}}$$

tabelliert. Beim Vorhandensein einer Verzögerungszeit

$t_d$ wird eine Tabelle mit $\hat{p}(d)$ und $t_d$ als Eingangswerten und $d_{opt}$ als Ausgangswert verwendet.

Das erfindungsgemässe Verfahren hat den Vorteil, dass es von Informationen ausgeht, die in einer Implementation des ARQ-Protokolls ohnehin verfügbar sind, nämlich die Nutzdatenlänge d und die gesamte Anzahl k1 von übertragenen Datenrahmen und die Anzahl k2 von fehlerhaft übertragenen Datenrahmen. Diese Informationen sind beispielsweise in einer "logical link control"-Schicht des allgemein bekannten ISO/OSI Kommunikationsmodelles vorhanden. Das erfindungsgemässe Verfahren benötigt als weiteren Vorteil keine Modifikationen einer physikalischen Schicht des Datenübertragungssystems.

Die Erfindung wird vorzugsweise mit Datenübertragungssystemen mit einer relativ hohen Bitfehlerrate $p_b$ verwendet, has heisst, dass $p_b > 0.001$ oder insbesondere $p_b > 0.01$ ist. Bei solchen Systemen weist der relative Durchsatz $\eta$ ein deutlich von der Bitfehlerrat $p_b$ abhängiges Maximum auf, wie aus Figur 1 ersichtlich ist.

Eine erfindungsgemässe Vorrichtung weist ein Mittel zur Ermittlung einer gemessenen Paketfehlerrate $\hat{p}(d)$ aufweist, welches vorzugsweise ein Mittel zur Zählen der Gesamtzahl k1 der übertragenen (fehlerhaften oder korrekten) Datenrahmen, ein Mittel zum Zählen der Anzahl k2 von fehlerhaft übertragenen Datenrahmen und ein Mittel zur Bestimmung der gemessenen Paketfehlerrate $\hat{p}(d)$ als Quotient k2/k1 aufweist. Ferner weist die erfindungsgemässe Vorrichtung ein Mittel zur Bestimmung der optimalen Nutzdatenlänge $d_{opt}$ nach Massgabe der gemessenen Paketfehlerrate $\hat{p}(d)$ auf.

Vorzugsweise weist die erfindungsgemässe Vorrichtung Mittel zur Bestimmung der geschätzten Bitfehlerrate $\hat{p}_b$ auf. Vorzugsweise weist die erfindungsgemässe Vorrichtung auch Mittel auf, um die ermittelte optimalen Nutzdatenlänge $d_{opt}$ zur Kommunikation zu verwenden.

Bezugszeichenliste

| | |
|---|---|
| 1 | Sender |
| 2 | Empfänger |
| 3 | Daten |
| 4 | Bestätigungssignale |
| d | Nutzdatenlänge |
| $d_{opt}$ | optimale Nutzdatenlänge |
| h | Kopflänge |
| k1 | gesamte Anzahl von übertragenen Datenrahmen |
| k2 | Anzahl von fehlerhaft übertragenen Datenrahmen |
| $\hat{p}(d)$ | Paketfehlerrate |
| $p(d)$ | gemessene Paketfehlerrate |
| $\hat{p}_b$ | Bitfehlerrate |
| $p_b$ | geschätzte Bitfehlerrate |
| $t_d$ | Verzögerungszeit |

$\eta$     relativer Durchsatz

**Patentansprüche**

1. Verfahren zur Datenübertragung mit variabler Paketlänge, welches ein Automatic Repeat Request (ARQ) Protokoll verwendet, dadurch gekennzeichnet, dass

eine Paketfehlerrate $\hat{p}(d)$ gemessen wird, anhand dieser gemessenen Paketfehlerrate $\hat{p}(d)$ eine optimale Nutzdatenlänge $d_{opt}$, welche einen relativen Durchsatz $\eta$ der Daten maximiert, ermittelt wird, und
diese optimale Nutzdatenlänge $d_{opt}$ zur Datenübertragung verwendet wird.

2. Verfahren gemäss Anspruch 1, dadurch gekennzeichnet, dass die gemessene Paketfehlerrate $\hat{p}(d)$ gemäss

$$\hat{p}(d) = \frac{k2}{k1}$$

bestimmt wird, wobei k1 eine gesamte Anzahl von übertragenen Datenrahmen eines Zeitintervalls und k2 eine Anzahl von fehlerhaft übertragenen Datenrahmen des Zeitintervalls ist.

3. Verfahren gemäss Anspruch 1, dadurch gekennzeichnet, dass anhand der gemessenen Paketfehlerrate $\hat{p}(d)$ eine geschätzte Bitfehlerrate $\hat{p}_b$ ermittelt wird, und dass die optimale Nutzdatenlänge $d_{opt}$ anhand dieser geschätzten Bitfehlerrate $\hat{p}_b$ ermittelt wird.

4. Verfahren gemäss Anspruch 3, dadurch gekennzeichnet, dass die geschätzte Bitfehlerrate $\hat{p}_b$ aus der gemessenen Paketfehlerrate $\hat{p}(d)$ gemäss

$$\hat{p}_b = 1 - (1 - \hat{p}(d))^{1/(h+d)}$$

bestimmt wird, wobei h eine Anzahl bits von Kopfdaten eines Datenrahmens und d eine Anzahl bits von Nutzdaten eines Datenrahmens ist.

5. Verfahren gemäss Anspruch 3, dadurch gekennzeichnet, dass die optimale Nutzdatenlänge $d_{opt}$ anhand der geschätzten Bitfehlerrate $\hat{p}_b$ gemäss

$$d_{opt} = -\frac{h}{2} + \sqrt{\frac{h^2}{4} - \frac{h}{\log(1 - \hat{p}_b)}}$$

bestimmt wird, wobei h eine Anzahl bits von Kopfdaten eines Datenrahmens ist.

6. Verfahren gemäss Anspruch 1, dadurch gekennzeichnet, dass die optimale Nutzdatenlänge $d_{opt}$ anhand der gemessenen Paketfehlerrate $\hat{p}(d)$ ermittelt wird, indem $d_{opt}$ derjenige Wert von d ist, welcher den gemäss

$$\eta(d) = \frac{d}{d+h} \cdot \frac{1 - \hat{p}(d)}{1 - \hat{p}(d) + a \cdot \hat{p}(d)}$$

definierten relativen Durchsatz $\eta$ der Daten maximiert, wobei

$$a = \frac{(h+d)T_b + 2t_d}{(h+d)T_b}$$

ist, und wobei h eine Anzahl bits von Kopfdaten eines Datenrahmens ist, $t_d$ eine Verzögerungszeit einer Datenübertragung und $T_b$ gleich einer Bitdauer ist.

7. Verfahren gemäss Anspruch 1, dadurch gekennzeichnet, dass die optimale Nutzdatenlänge $d_{opt}$ anhand der gemessenen Paketfehlerrate $\hat{p}(d)$ durch eine vorausberechnete Funktionstabelle und/oder eine polynomiale Darstellung geschieht.

8. Vorrichtung zur Datenübertragung mit variabler Paketlänge, wobei die Datenübertragung ein Automatic Repeat Request (ARQ) Protokoll aufweist, dadurch gekennzeichnet, dass die Vorrichtung

ein Mittel zur Ermittlung einer gemessenen Paketfehlerrate $\hat{p}(d)$ aufweist, und
ein Mittel zur Bestimmung einer optimalen Nutzdatenlänge $d_{opt}$ nach Massgabe der gemessenen Paketfehlerrate $\hat{p}(d)$ aufweist.

9. Vorrichtung gemäss Anspruch 8, dadurch gekennzeichnet, dass die Vorrichtung ein Mittel zur Zählen einer Gesamtzahl k1 von übertragenen Datenrahmen, ein Mittel zum Zählen einer Anzahl k2 von fehlerhaft übertragenen Datenrahmen, und ein Mittel zur Bestimmung der gemessenen Paketfehlerrate $\hat{p}(d)$ als Quotient k2/k1 aufweist.

10. Vorrichtung gemäss Anspruch 8, dadurch gekennzeichnet, dass die Vorrichtung Mittel zur Bestimmung einer geschätzten Bitfehlerrate $\hat{p}_b$ nach Massgabe der gemessenen Paketfehlerrate $\hat{p}(d)$ und ein Mittel zur Bestimmung der optimalen Nutzdatenlänge $d_{opt}$ nach Massgabe der geschätzten Bitfehlerrate $\hat{p}_b$ aufweist.

**Fig. 1**

**Fig. 2**

**Fig. 3**

**Fig. 4**

**Europäisches Patentamt**

# EUROPÄISCHER RECHERCHENBERICHT

Nummer der Anmeldung

EP 00 81 0080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | M.SCHWARTZ: "Telecommunication Networks:Protocols, Modeling and Analysis" 1987 , ADDISON-WESLEY PUBLISHING COMPANY , READING, MASSACHUSETTS, US XP002141404 | 1,6,8 | H04L1/00 H04L1/20 |
| Y | * Seite 125, Absätze 4-1,4-2 - Seite 134 * | 2-5,7,9, 10 | |
| X | WO 99 44341 A (TANTIVY COMMUNICATIONS) 2. September 1999 (1999-09-02) * Zusammenfassung * * Seite 3, Zeile 8 - Seite 4, Zeile 26 * * Seite 10, Zeile 30 - Seite 11, Zeile 16 * * Seite 17, Zeile 1 - Seite 22, Zeile 27 * | 1,8 | |
| D,X | SHINSUKE HARA ET AL: "THROUGHPUT PERFORMANCE OF SAW-ARQ PROTOCOL WITH ADAPTIVE PACKET LENGTH IN MOBILE PACKET DATA TRANSMISSION" IEEE TRANSACTIONS ON VEHICULAR TECHNOLOGY,US,IEEE INC. NEW YORK, Bd. 45, Nr. 3, 1. August 1996 (1996-08-01), Seiten 561-569, XP000632299 ISSN: 0018-9545 * Zusammenfassung * * Absätze '000I!,'0IVB! * | 1,8 | RECHERCHIERTE SACHGEBIETE (Int.Cl.7) H04L |
| X | CHAKRABORTY S S ET AL: "AN ADAPTIVE ARQ SCHEME WITH PACKET COMBINING FOR TIME VARYING CHANNELS" IEEE COMMUNICATIONS LETTERS,US,IEEE SERVICE CENTER, PISCATAWAY,US, Bd. 3, Nr. 2, Februar 1999 (1999-02), Seiten 52-54, XP000824092 ISSN: 1089-7798 * das ganze Dokument * | 1,8 | |

-/--

Der vorliegende Recherchenbericht wurde für alle Patentansprüche erstellt

| Recherchenort | Abschlußdatum der Recherche | Prüfer |
|---|---|---|
| DEN HAAG | 29. Juni 2000 | Toumpoulidis, T |

**Europäisches Patentamt**

## EUROPÄISCHER RECHERCHENBERICHT

Nummer der Anmeldung

EP 00 81 0080

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 5 699 364 A (YAMAGISHI KATSUMI ET AL) 16. Dezember 1997 (1997-12-16) <br> * Zusammenfassung * <br> * Spalte 1, Zeile 53 - Spalte 2, Zeile 67 * <br> --- | 3-5,10 | |
| Y | US 4 691 314 A (BERGINS LEWIS A ET AL) 1. September 1987 (1987-09-01) <br> * Zusammenfassung * <br> * Spalte 4, Zeile 53 - Spalte 5, Zeile 4 * <br> * Spalte 5, Zeile 63 - Spalte 6, Zeile 2 * <br> --- | 2,9 | |
| Y | US 4 841 526 A (WILSON JON C ET AL) 20. Juni 1989 (1989-06-20) <br> * Zusammenfassung * <br> * Spalte 4, Zeile 30 - Zeile 56 * <br> * Spalte 9, Zeile 67 - Spalte 10, Zeile 22 * <br> ----- | 7 | |

**RECHERCHIERTE SACHGEBIETE (Int.Cl.7)**

Der vorliegende Recherchenbericht wurde für alle Patentansprüche erstellt

| Recherchenort | AbschluBdatum der Recherche | Prüfer |
|---|---|---|
| DEN HAAG | 29. Juni 2000 | Toumpoulidis, T |

**ANHANG ZUM EUROPÄISCHEN RECHERCHENBERICHT
ÜBER DIE EUROPÄISCHE PATENTANMELDUNG NR.**                EP 00 81 0080

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2000

| Im Recherchenbericht angeführtes Patentdokument | | Datum der Veröffentlichung | Mitglied(er) der Patentfamilie | | Datum der Veröffentlichung |
|---|---|---|---|---|---|
| WO 9944341 | A | 02-09-1999 | AU | 2575899 A | 15-09-1999 |
| US 5699364 | A | 16-12-1997 | JP | 8256065 A | 01-10-1996 |
|  |  |  | JP | 8256132 A | 01-10-1996 |
|  |  |  | CN | 1138782 A | 25-12-1996 |
| US 4691314 | A | 01-09-1987 | KEINE | | |
| US 4841526 | A | 20-06-1989 | EP | 0162478 A | 27-11-1985 |

EPO FORM P0461

Für nähere Einzelheiten zu diesem Anhang : siehe Amtsblatt des Europäischen Patentamts, Nr.12/82